# EUROPÄISCHE PATENTSCHRIFT

(11) **EP 4 021 804 B1**
(45) Veröffentlichungstag und Bekanntmachung des Hinweises auf die Patenterteilung: **28.02.2024**
(21) Anmeldenummer: 20764596.1
(22) Anmeldetag: 25.08.2020
(51) Int. Cl.: B64D 11/00, B64D 11/04

(54) **HANDHABUNGSSYSTEM FÜR BEHÄLTER IN EINEM FAHRZEUG SOWIE EIN FAHRZEUG MIT EINEM DERARTIGEN SYSTEM**
HANDLING SYSTEM FOR CONTAINERS IN A VEHICLE AND VEHICLE COMPRISING SUCH A SYSTEM
SYSTÈME DE MANUTENTION DES CONTENEURS DANS UN VÉHICULE ET VÉHICULE AVEC UN TEL SYSTÈME

(30) Priorität: 28.08.2019 DE 102019123107
(43) Veröffentlichungstag der Anmeldung: 06.07.2022
(73) Patentinhaber: Airbus Operations GmbH, 21129 Hamburg (DE)
(72) Erfinder: LANGE, Roland, 21079 Hamburg (DE); WIETZKE, Andreas, 21079 Hamburg (DE); LEHNERT, Jan, 21079 Hamburg (DE); SOTNIKOV, Artjom, 21079 Hamburg (DE); SACHSE, Mika, 21129 Hamburg (DE)
(74) Vertreter: LKGLOBAL Lorenz & Kopf Patentanwalt Attorney at Law PartG mbB
(86) Internationale Anmeldenummer: PCT/EP2020/073717
(87) Internationale Veröffentlichungsnummer: WO 2021/037836

(56) Entgegenhaltungen:
- EP-A2- 1 955 894
- DE-U1-202012 102 254
- US-A- 6 152 287
- US-A1- 2014 166 806

## Beschreibung

### TECHNISCHES GEBIET

Die Erfindung betrifft ein Handhabungssystem für Behälter in einem Fahrzeug sowie ein Fahrzeug mit einem derartigen System.

### HINTERGRUND DER ERFINDUNG

Fahrzeuge, die dem Transport einer Vielzahl von Passagieren dienen, sind üblicherweise mit Kabinen mit Passagiersitzen, einer oder mehreren Bordtoiletten und optional einer oder mehreren Bordküchen ausgestattet. Insbesondere bei der Kompaktierung von Bordküchen in Verkehrsflugzeugen existieren Konzepte, bei denen Stellplätze für Servierwagen (Trolleys) genutzt werden, in denen mehrere Servierwagen hintereinander angeordnet werden. Üblicherweise bezieht sich dies auf die Verwendung von Servierwagen gemäß ATLAS-, ARINC- oder KSSU-Standards und die kombinierte Verwendung eines Servierwagens mit voller Bautiefe ("Full Size Trolley") und eines Servierwagens mit halber Bautiefe ("Half Size Trolley") oder zweier Servierwagen mit voller Bautiefe (zwei "Full Size Trolley. Auch für Versorgungsbehälter, die als Boxen in der Bordküche gelagert werden müssen, kann aufgrund der Bautiefe für den Lagerraum eine Verstauung von zwei Boxen oder mehr hintereinander möglich sein.

Zum Entnehmen von Servierwagen aus einem solchen Stellplatz wird üblicherweise ein an einer Vorderseite des Servierwagens befindlicher Griff durch einen Benutzer gegriffen und aus dem Stellplatz herausgezogen. Der Servierwagen ist dafür mit Rollen ausgestattet, die zum Verfahren innerhalb des Küchenbereichs sowie auch für den Servierprozess innerhalb der Flugzeugkabine zum Bewegen des Servierwagens im Flugzeuglängsgang von Sitzreihe zu Sitzreihe vorgesehen sind. Für Servierwagen auf den hinteren Stellplätzen ist notwendigerweise eine Entnahmevorrichtung vorgesehen. Insbesondere wenn ein Full-Size-Trolley auf einem hinteren Stellplatz geparkt ist, ist es für die Flugbegleiter möglicherweise ein größerer Kraftaufwand und auch in der Zugänglichkeit erschwert, den Full-Size-Trolley aus dem hinteren Stellplatz heraus zu befördern.

Derartige Entnahmeeinrichtungen für Servierwagen sind aus WO 2016 034 531 A1 oder auch WO 2014 125 046 A1 bekannt. Hier werden über Stäbe und Eingriffsvorrichtungen zum Trolleykörper ein Vor-und Zurückbewegen des Servierwagens in dem Stellplatzraum vorgesehen. Jedoch kann die Bedienbarkeit und Handhabbarkeit eines Servierwagens gerade für Stellplätze, die hintereinander angeordnet sind, verbessert werden. Ein gattungsgemäßes Handhabungssystem wurde auch in US2014166806 A1 offenbart.

### ZUSAMMENFASSUNG DER ERFINDUNG

Zur weiteren Kompaktierung von Bordküchen könnte es hilfreich sein, Verpflegungsbehälter, wie Servierwagen oder auch Boxen hintereinander in einem Aufnahmeraum anzuordnen. Dies ist jedoch in der Handhabbarkeit nicht optimal, denn ein hinterer Servierwagen oder eine hintere Box kann von Bordpersonal nur sehr schwer erreicht werden, da er sich in einem relativ großen Abstand von einer Einschuböffnung des Stellplatzes befindet.

Eine Aufgabe der Erfindung liegt folglich darin, eine Vorrichtung oder eine Bordküche vorzuschlagen, mit der hintereinander angeordneten Verpflegungsbehälter in einem Aufnahmeraum durch Bordpersonal leicht zu handhaben sind, so dass insbesondere in einem Aufnahmeraum hinten angeordnete Verpflegungsbehälter möglichst einfach erreichbar sind.

Die Aufgabe wird gelöst durch ein Handhabungssystem für Verpflegungsbehälter in einem Fahrzeug mit den Merkmalen des unabhängigen Anspruchs 1. Vorteilhafte Ausführungsformen und Weiterbildungen sind den Unteransprüchen und der nachfolgenden Beschreibung zu entnehmen. Die Anwendung eines derartigen Handhabungssystems ist nicht auf Verpflegungsbehälter beschränkt, es können auch Behälter für andere Zwecke mit dem erfindungsgemäßen Handhabungssystem bewegt werden.

Es wird ein Handhabungssystem für einen Aufnahmeraum in einem Fahrzeug zur Lagerung für Behälter vorgeschlagen, welches eine Linearführung angeordnet an einer Seitenwand oder einer Unterseite einer Deckplatte des Aufnahmeraumes vorsieht. Die Linearführung führt mindestens ein Mitnehmerelement entlang der Bewegungsrichtung des Behälters, wobei die Lagerposition des Behälters mit seiner Rückwand im Bereich der Rückwand des Aufnahmeraumes vorgesehen ist sowie die Entnahmeposition im Bereich einer Einschuböffnung, angeordnet gegenüberliegend zur Hinterwand, vorgesehen ist. Das mindestens eine Mitnehmerelement steht in Wirkverbindung mit mindestens einer Spindelmutter eines Spindelantriebs. Damit wird der Behälter von einer Verstau- und Lagerposition des Behälters in eine Entnahmeposition des Behälter und umgekehrt linear bewegt.

Die der Einschuböffnung gegenüberliegend angeordnete Rückwand des Aufnahmeraums oder auch ein Endanschlag ist eine hintere Begrenzung eines Stellplatzes in dem Aufnahmeraum, an die ein hinterster Behälter anstößt bzw. in Anschlag gerät bzw. angrenzt. Dies entspricht der Lagerposition des Versorgungsbehälters. Die Größe und Form des Behälters kann je nach Anforderung in dem Fahrzeug gewählt werden. Wird das Fahrzeug als ein Verkehrsflugzeug realisiert, bietet sich die Verwendung von Servierwagen nach einschlägigen Standards an, etwa nach dem ATLAS-Standard. Die erfindungsgemäßen Vorteile werden zudem dann besonders deutlich, wenn die rollbaren Behälter eine Tiefenerstreckung aufweisen, die größer als 30 bis 40 cm ist. Insbesondere bei einem Full-Size-Trolley, der ungefähr eine Länge von 80 bis 85 cm aufweist.

In einer bevorzugten Ausgestaltung ist der Aufnahmeraum zum Aufnehmen mindestens zwei hintereinander angeordneter Behälter mit einem vorderen Stellplatz und einem hinteren Stellplatz versehen, wobei sich die Linearführung im Wesentlichen von der Einschuböffnung im Bereich des vorderen Stellplatzes bis im Wesentlichen zur Rückwand des Aufnahmeraumes erstreckt.

Nach einer herkömmlichen Entnahme eines vorderen Behälters, der an der Einschuböffnung angeordnet ist, kann durch Verwendung des Handhabungssystems der hintere Behälter entnommen werden, der von der Einschuböffnung deutlich beabstandet im Innern des Aufnahmeraumes angeordnet ist.

Für Versorgungsbehälter, beispielsweise Servierwagen, die auf den hinteren Stellplätzen einer Bordküche in einem Fahrzeug angeordnet sind, ist vorzugsweise das erfindungsgemäße Handhabungssystem vorgesehen. Insbesondere wenn ein Full-Size-Trolley in einem hinteren Stellplatz geparkt ist, ist es für die Flugbegleiter eine große Erleichterung, den relativ schweren Behälter mittels dem Handhabungssystem in einen gut erreichbaren Zugriffsbereich zu positionieren und in einfacher Weise aus dem hinteren Stellplatz heraus zu befördern.

Es kann bevorzugt der Spindelantrieb mit mindestens einer Gewindespindel vorgesehen sein. Es kann eine einzelne Gewindelspindel, die mit einer Spindelmutter in Wirkverbindung steht, zur Umsetzung einer rotatorischen Bewegung in eine Linearbewegung zur Bewegung des mindestens einen Mitnehmerelementes vorgesehen sein. Alternativ sind auch zwei parallel verlaufende Gewindespindeln möglich, zwischen denen das mindestens eine Mitnehmerelement gelagert ist. Entsprechend des zur Verfügung Bauraumes kann zwischen möglichen Gestaltungen des Spindelantriebes gewählt werden.

Wenn eine schmalere Ausführung vorteilhaft ist, kann eine konstruktive Veränderung des Spindelantriebs vorgesehen sein. Dies ist jedoch anhand der zu berücksichtigenden Lasten, auftretenden Kräfte und Drehmomenten sowie einzusetzenden Handhabungskräften zu dimensionieren. Der Spindelantrieb gemäß einer zweiten Ausführungsform ist mit zwei Gewindespindeln ausgestattet, die über ein Zahnradgetriebe in Wirkverbindung stehen.

Um einen Versorgungsbehälter mit entsprechender Längsausdehnung sicher entlang der Linearführung zu bewegen, ist nicht nur ein Mitnehmerelement vorgesehen. Das mindestens eine Mitnehmerelement bildet mit einem vorderen Mitnehmer eine Mitnehmeranordnung. Erfindungsgemäß, sind vorderer und hinterer Mitnehmer über eine Tragplatte miteinander verbunden, wobei diese Mitnehmeranordnung in der Linearführung bewegbar ist.

Der vordere Mitnehmer ist drehbar oder verschiebbar ausgebildet, um beim Einfahren des Versorgungsbehälters in den Aufnahmeraum aus dem Bewegungsraum entfernt werden zu können.

Der Spindelantrieb kann in einer bevorzugten Ausgestaltung über einen Kurbelantrieb angetrieben werden. Dafür ist die Gewindespindel bevorzugt als eine Trapezspindel mit einer Steigung von 25 mm bis 100 mm ausgebildet. Für den Anwendungsfall eines in der Bordküche eines Flugzeuges verwendeten Versorgungsbehälters, eines "Full-Size-Trolleys" kann eine Steigung von 40 mm bis 80 mm vorteilhaft sein. Dies ermöglicht mit entsprechend wenigen Drehungen der Handkurbel eine Linearbewegung, die einen Behälter vom vorderen Stellplatz zur Lagerposition auf den hinteren Stellplatz bewegt oder umgekehrt.

Dafür kann das Handhabungssystem vorteilhaft mit einem Kurbelantrieb ausgestattet sein, wobei der Kurbelantrieb eine Kurbelstange sowie eine Handkurbel aufweist und die Kurbelstange drehfest mit mindestens einer Gewindespindel verbunden ist.

In einer alternativen Ausführungsform ist es möglich, den Spindelantrieb mit einem Spindelmotor vorzusehen und somit die Drehung der Gewindespindel zu bewirken. Dafür sind elektromotorische Antriebe denkbar.

Die Erfindung betrifft ferner ein Fahrzeug, insbesondere ein Flugzeug, mit einer Kabine und einem darin befindlichen Kabinenmonument, das ein Handhabungssystem gemäß der vorhergehenden Beschreibung aufweist.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Figuren 1 und 2 zeigen eine Seitenansicht eines Aufnahmeraumes für zwei hintereinander angeordnete Versorgungsbehälter auf zwei hintereinander angeordneten Trolleystellplätzen.
Fig. 3 zeigt das Handhabungssystem im Aufnahmeraum im Bereich der Deckplatte in einer Seitenansicht.
Fig. 4 zeigt das erfindungsgemäße Handhabungssystem in einer perspektivischen Ansicht von vorn.
Fig. 5 zeigt das erfindungsgemäße Handhabungssystem in einer perspektivischen Ansicht von hinten.
Fig. 6 zeigt das erfindungsgemäße Handhabungssystem in einer perspektivischen Ansicht von hinten in Wirkverbindung einer Mitnehmeranordnung mit dem Versorgungsbehälter.
Fig. 7 zeigt eine Ausführungsform des erfindungsgemäßen Handhabungssystems mit dem Detail der Mitnehmeranordnung.
Figuren 8 und 9 zeigen in einer perspektivischen Ansicht den Spindelantrieb in weiteren Details.
Fig. 10 zeigt den Versorgungsbehälter auf dem hinteren Stellplatz des Aufnahmeraumes in Wirkverbindung mit dem Handhabungssystem.
Fig. 11 zeigt das erfindungsgemäße Handhabungssystem in einer zweiten Ausführungsform in einer Seitenansicht.
Fig. 12 zeigt das erfindungsgemäße Handhabungssystem gemäß der zweiten Ausführungsform in einer perspektivischen Darstellung.
Figuren 13 bis 16 zeigen in einer perspektivischen Ansicht das Handhabungssystem in weiteren Details.
Fig. 17 zeigt in einer perspektivischen Darstellung die Ausführungsform eines Zahnradgetriebes in der Verwendung für den Spindelantriebes des Handhabungssystems gemäß der zweiten Ausführungsform.
Fig. 18 zeigt ein Flugzeug mit einer Kabine, in der eine Bordküche mit einem Aufnahmeraum angeordnet ist, ausgestattet mit einem erfindungsgemäßen Handhabungssystem.

### DETAILLIERTE DARSTELLUNG EXEMPLARISCHER AUSFÜHRUNGSFORMEN

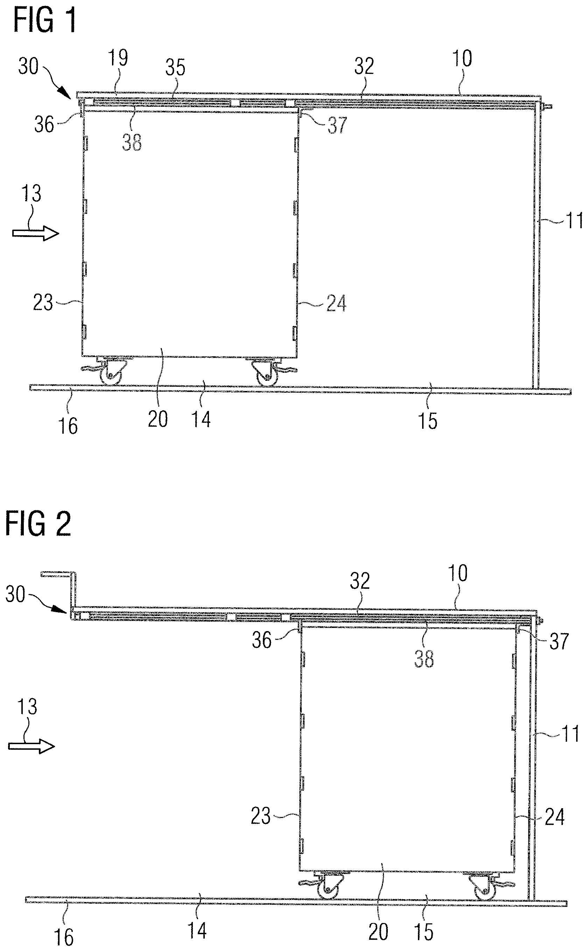

Die Figuren 1 und 2 zeigen einen Aufnahmeraum 10 mit zwei hintereinander angeordneten Trolleystellplätzen 14 und 15. Auf diesen Trolleystellplätzen können rollbare Versorgungsbehälter 20 abgestellt und gesichert werden.

Beispielhaft ist das Fahrzeug in diesem Ausführungsbeispiel ein Verkehrsflugzeug, die rollbaren Versorgungsbehälter 20 sind daher als Servierwagen, sogenannte Trolleys, ausgeführt. Es handelt sich hierbei um sogenannte "Full-Size Trolleys", das heißt Servierwagen mit einer vollen Bautiefe von ungefähr 80 cm. Der Aufnahmeraum 10 ist üblicherweise voll geschlossen und über eine Einschuböffnung 13 zugänglich. Er kann Bestandteil einer Bordküche, fachüblich genannt auch Galley, sein. Er weist einen Boden 16 auf. Dieser Boden 16 kann Teil eines Flugzeugkabinenfußbodens oder auch ein Fußboden der Bordküche sein. Für die Lagerung der Versorgungsbehälter 20 werden diese über die Einschuböffnung 13 (durch ein Pfeilsymbol gekennzeichnet) in den Aufnahmeraum 10 eingeschoben. Der hintere Trolleystellplatz 15 ist in dem gezeigten Aufnahmeraum 10 so vorgesehen, dass ein hinterer Versorgungsbehälter mit seiner hinteren Behälterwand 24 benachbart bzw. angrenzend zur Rückwand 11 des Aufnahmeraumes 10 in der Lagerposition angeordnet ist. Der vordere Trolleystellplatz 14 und der hintere Trolleystellplatz 15 sind entlang einer gemeinsamen Längsachse ausgerichtet. Der vordere Versorgungsbehälter 20 ist im beladenen Zustand des Aufnahmeraumes 10 somit genau vor dem hinteren Versorgungsbehälter (nicht gezeigt) aus Sicht der Einschuböffnung positioniert, sodass die Entnahme des hinteren Versorgungsbehälters von der Lagerposition nur möglich ist, wenn der vordere Versorgungsbehälter 20 entfernt und somit der vordere Trolleystellplatz 14 frei ist. Der Zugang über die Einschuböffnung 13 zum hinteren Trolleystellplatz 15 ist aufgrund der begrenzten Armreichweite bei einer Handhabung durch die Flugbegleiter schwierig oder auch ohne Hilfsmittel nicht durchführbar. Auch wenn diese Anordnung von Trolleystellplätzen in einem Verkehrsflugzeug zwar unter dem Aspekt der Bedienbarkeit nicht bevorzugt ist, können jedoch bauliche Zwänge dazu führen, in dem begrenzten Raum eines Verkehrsflugzeuges zu einer optimierten Raumausnutzung beizutragen, wenn solche Versorgungsbehälter auch hintereinander angeordnet werden können.

Um die Entnahme oder auch das Abstellen des Versorgungsbehälters 20 auf dem hinteren Stellplatz 15 zu ermöglichen, ist erfindungsgemäß ein Handhabungssystem 30 für diesen Stellplatz 15 vorgesehen. Diese erste Ausführungsform des Handhabungssystems 30 weist im Wesentlichen eine Linearführung 32 auf. Sie ist im Bereich der Deckplatte 19 des Aufnahmeraumes 10 angeordnet. Die Linearführung 32 ist mit Befestigungspunkten an der Deckplatte 19 befestigt.

Vorzugsweise wird sie an der Unterseite der Deckplatte 19 angeschraubt. Die Befestigung erfolgt an der Unterseite der Deckplatte 19, sozusagen somit an einer Innenwand des Aufnahmeraumes 10. Die Deckplatte 19 ist in der Verwendung des Aufnahmeraumes 10 in einer Bordküche eines Flugzeuges auch gleichzeitig die Arbeitsplatte der Küche. Mit dem der Linearführung 32 wird es ermöglicht, dass mindestens ein Mitnehmer 36 entlang der Linearführung 32 verfahren kann, der von oben bevorzugt an der vorderen Behälterwand 23 des Behälters 20 eingreift und somit den Behälter 20 vom vorderen Stellplatz 14 zum hinteren Stellplatz 15 bewegt. Der vordere Mitnehmer 36 ist über eine Trägerplatte 38 mit einem hinteren Mitnehmer 37 verbunden. Diese Bauteile bilden als eine Mitnehmeranordnung 35 das bewegliche Verschiebeelement an bzw. in der Linearführung 32.

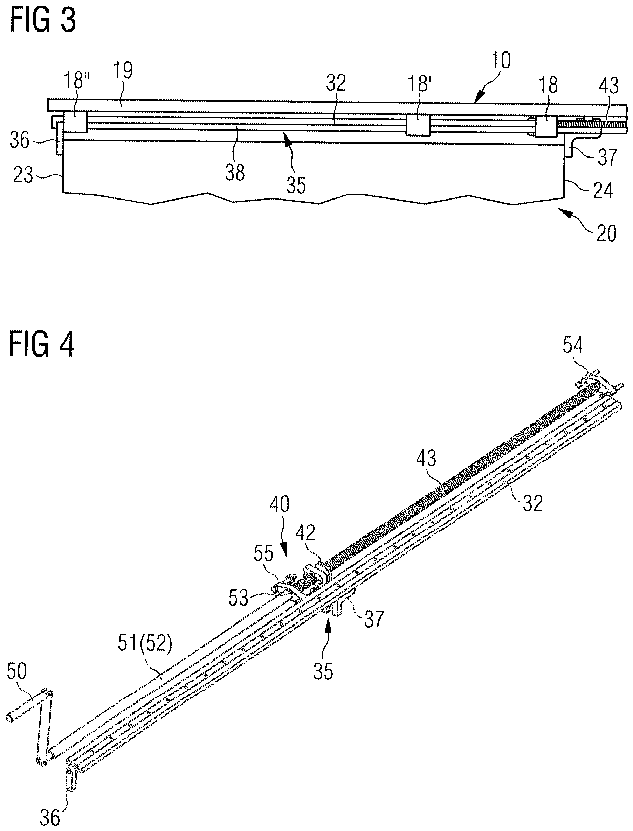

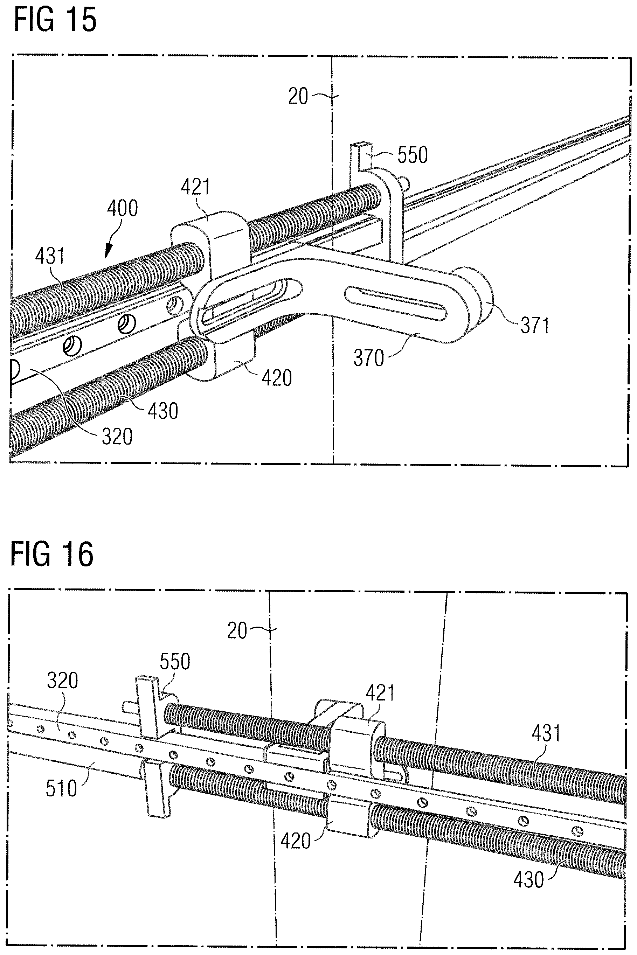

Fig. 3 zeigt ausschnittsweise das Handhabungssystem 30 im Aufnahmeraum 10 im Bereich der Deckplatte 19 in einer Seitenansicht. Die Mitnehmeranordnung 35 ist bevorzugt an mindestens zwei Schlitten in der Linearführung 32 gelagert. Die Mitnehmeranordnung 35 weist mit dem hinteren Mitnehmer 37 gleichzeitig einen Anschlag für den Versorgungsbehälter 20 auf. Zur Positionierung auf dem vorderen Stellplatz 14 im Aufnahmeraum 10 wird der Versorgungsbehälter 20 mit seiner Rückwand 24 bis an den Mitnehmer 37 eingefahren. Dieser ist verstellbar ausgebildet, wie in Fig. 15 gezeigt. Dann wird der vordere Mitnehmer 36 durch Verschieben oder Verdrehen in die Anschlagposition mit dem Versorgungsbehälter 20, vorzugsweise mit der Vorderwand 23, gebracht.

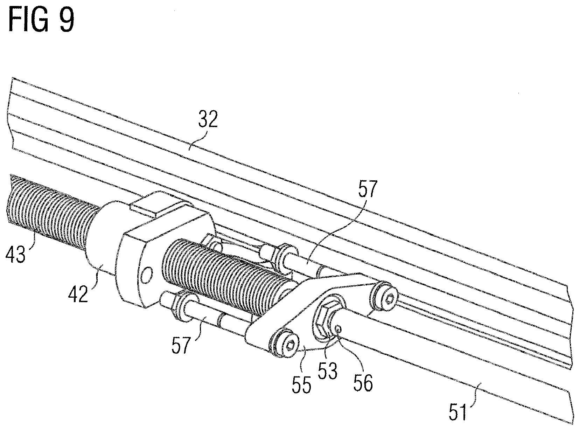

In Fig. 4 ist das erfindungsgemäße Handhabungssystem 30 in einer perspektivischen Ansicht gezeigt. Das Handhabungssystem 30 umfasst die Linerarführung 32, in der die Mitnehmeranordnung 35 mit vorderem Mitnehmer 36 und hinterem Mitnehmer 37 verschiebbar gelagert ist. Der hintere Mitnehmer 36 ist mit einer Spindelmutter 42 eines Spindelantriebs 40 fest verbunden. Die Spindelmutter 42 kann sich auf einer Gewindespindel 43 linear bewegen. Der Spindelantrieb 40 wird in der gezeigten Ausführungsform über eine Handkurbel 50 sowie Kurbelstange 51 angetrieben. Die rotatorische Bewegung der Handkurbel 50 sowie Kurbelstange 51wird dazu genutzt, diese in eine translatorische Bewegung umzuwandeln und damit die Mitnehmeranordnung 35 innerhalb der Linearführung 32 zu bewegen. Dafür ist die Gewindespindel 43 bevorzugt als eine Trapezspindel mit einer Steigung von 25 mm bis 100 mm ausgebildet. Dies ermöglicht mit entsprechend wenigen Drehungen der Handkurbel 50 eine Linearbewegung, die einen "Full-Size-Trolley" 20 vom vorderen Stellplatz 14 zur Lagerposition auf den hinteren Stellplatz 15 bewegt. Als bevorzugt hat sich eine Steigung von 40 mm bis 80 mm herausgestellt. Die Kurbelstange 51 wird mit der Gewindespindel 43 drehfest verbunden. Das Verbindungselement 53 ist genauer in Fig. 9 dargestellt.

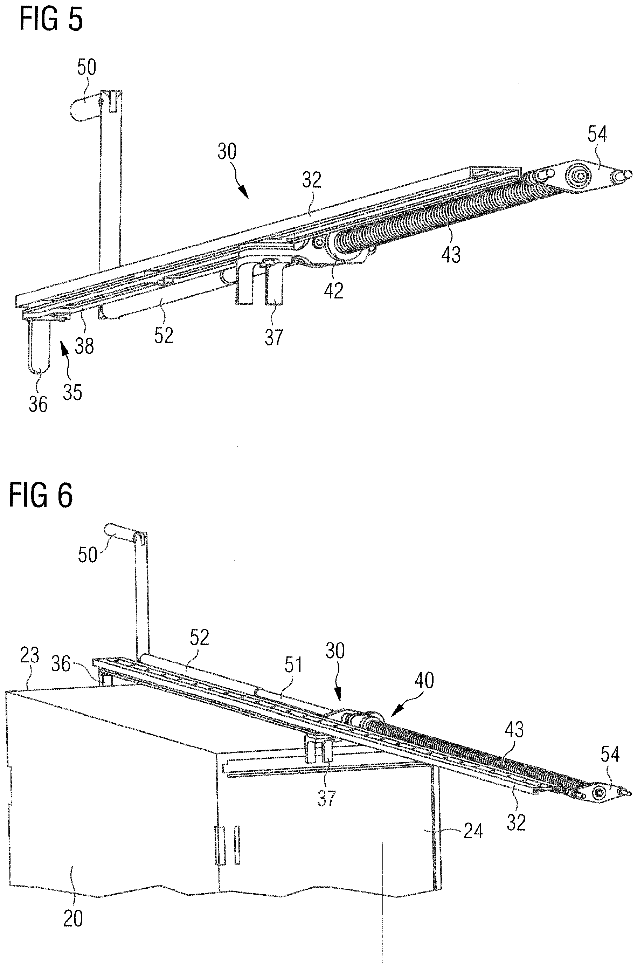

Fig. 5 zeigt das erfindungsgemäße Handhabungssystem 30 in einer perspektivischen Ansicht von hinten sowie Fig. 6 zeigt in einer Perspektivdarstellung das erfindungsgemäße Handhabungssystem 30 in Wirkverbindung von Mitnehmern 36 und 37 mit dem Versorgungsbehälter. 20. Es ist ersichtlich, dass die Mitnehmer 36 und 37 über die Trägerplatte 38 derart miteinander verbunden sind, dass sie der Bautiefe eines Versorgungsbehälters 20 entsprechen und somit der vordere Mitnehmer 36 an der Vorderwand 23 des Behälters 20 sowie der hintere Mitnehmer 37 an der hinteren Behälterwand 24 angreifen kann. Damit wird eine sichere Führung des Versorgungsbehälters 20 durch die Mitnehmeranordnung 35 erreicht.

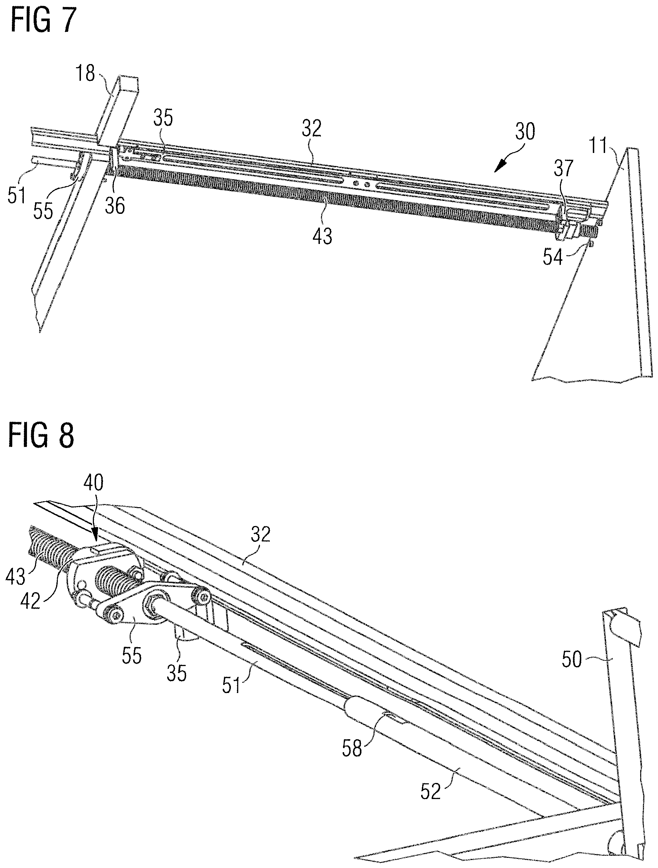

Fig. 7 zeigt eine Ausführungsform des erfindungsgemäßen Handhabungssystems 30 mit dem Detail der Mitnehmeranordnung 35. Weiterhin ist erkennbar, wie die Integration des Handhabungssystems 30 in den Aufnahmeraum 10 erfolgen kann. Dafür ist eine Ansicht von unten auf das Handhabungssystem 30 gezeigt. Die Befestigung des Handhabungssystems 30 wird einerseits im hinteren Teil des Aufnahmeraumes 10 im Bereich der Rückwand 11 realisiert. Die Linearführung 32 sowie der Spindelantrieb 40 mit der Gewindespindel 43 verlaufen entlang der Bewegungsrichtung des Verpflegungsbehälters 20 im Wesentlichen parallel unterhalb der Deckplatte 19 (in dieser Figur nicht gezeigt). Mittels eines Befestigungsbeschlages/ Flanschlagers 54 wird die Gewindespindel 43 drehbar an der Rückwand 11 fixiert. Die Gewindespindel 43 ist über ein weiteres Flanschlager 55 an der Unterseite der Deckplatte 19, beispielsweise an einem Trägerelement 18 gelagert. Neben der Fixierung am hinteren Ende erfolgt im mittleren Bereich des Aufnahmeraumes 10 die Halterung der Gewindespindel 43 am Trägerelement 18. Abhängig von der Länge des notwendigen Bewegungsweges der Mitnehmeranordnung 35, welche direkt von der Bautiefe des Aufnahmeraumes 10 sowie der Bautiefe des zu lagernden und mit dem Handhabungssystem 30 zu bewegenden Behälter abhängig ist, wird die Position des weiteren Flansches 55 an der Unterseite der Deckplatte 19 gewählt.

Figuren 8 und 9 zeigen in einer perspektivischen Ansicht den Spindelantrieb 40 in weiteren Details. Die Gewindespindel 43 ist drehfest mit der Kurbelstange 51 verbunden. Dafür ist die Gewindespindel 43 und die Kurbelstange 51 über eine Gewindeverbindung 53 verbunden und mit einem Stift 56 gesichert. Die Lagerung des vorderen Endes der Gewindespindel 43 wird mittels des Flanschlagers 55 ermöglicht. Das Flanschlager 55 ist mittels Befestigungselementen 57 an einem Trägerelement 18 (siehe Figur 7) befestigt. Das Trägerelement 18 kann auch ersetzt werden durch eine direkte Befestigung des Flansches 55 an der Unterseite der Deckplatte 19. Die Spindelmutter 42 wird durch die Drehbewegung der Kurbelstange 51 durch das Betätigen der Handkurbel 50 linear entlang der Gewindespindel 43 bewegt und verschiebt somit die Mitnehmeranordnung 35 in der Linearführung 32. In Fig. 8 ist eine besondere Ausgestaltung der Kurbelstange 51 sowie der Handkurbel 50 gezeigt. Um die Handkurbel 50 bei Nichtgebrauch zu verstauen, kann die Kurbelstange 51 teleskopierbar gestaltet sein. Dafür ist ein Kurbelstangenrohr 52 mit einer klappbar ausgebildeten Handkurbel 50 verbunden. Das Kurbelstangenrohr 52 ist beispielsweise mittels einer Passfeder-Nut-Verbindung 58 mit der Kurbelstange 51 verbunden. Bei Nichtgebrauch der Handkurbel 50 kann die Kurbelstange 51 in das Kurbelstangenrohr 52 eingeschoben werden. Alternativ kann der Handgriff 50 auch abnehmbar gestaltet sein und an einem gut zugänglichen Zugriffsbereich für die Flugbegleiter in der Bordküche verstaut werden.

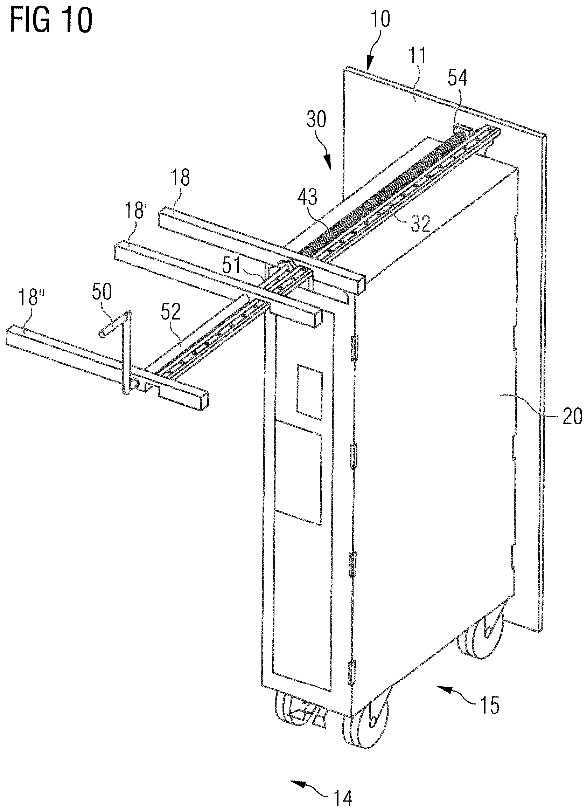

In Fig. 10 ist in einer Perspektivansicht der Versorgungsbehälter 20 auf dem hinteren Stellplatz 15 des Aufnahmeraumes 10 in Wirkverbindung mit dem Handhabungssystem 30 gezeigt. Der Aufnahmeraum 10 ist nur durch die Rückwand 11 sowie Teile der Deckplatte 19, hier mit Trägerelementen 18, 18' und 18", repräsentiert. Das Trageelement 18 ist als Befestigungspunkt für das vordere Flanschlager 55 zur Lagerung der Gewindespindel 43 sowie das Tragelement 18' als Befestigungspunkt für das Kurbelstangenrohr 52 vorgesehen. Das Tragelement 18" repräsentiert die Vorderkante der Deckplatte 19, die ebenfalls mindesten einen Befestigungspunkt für das Kurbelstangenrohr 52 sowie der Linearführung 32 enthält.

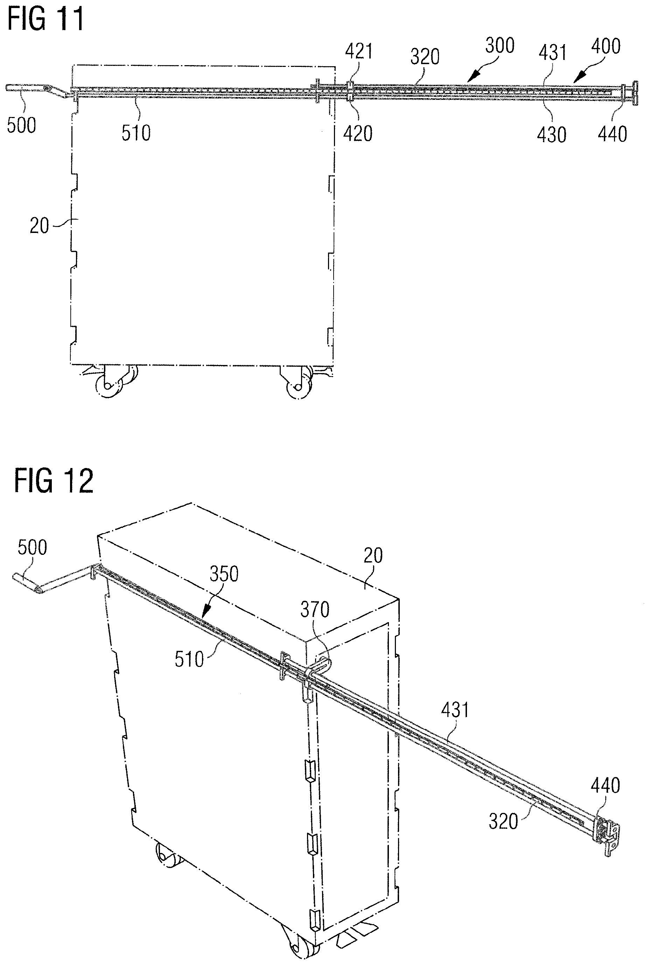

In den nachfolgenden Figuren 11ff wird ein Handhabungssystem 300 gemäß einer zweiten Ausführungsform gezeigt. Hier ist der Versorgungsbehälter 20 mit dem an einer Seitenwand 130 des Aufnahmeraumes 100 angeordneten Handhabungssystem 300 in Wirkverbindung gezeigt. Dies kann vorteilhaft sein, wenn aufgrund von baulichen Restriktionen zwischen dem Versorgungsbehälter 20 und der Deckplatte 19 wenig bzw. nicht ausreichender Bauraum zur Verfügung steht. An einer Seitenwand 130 kann auch das Handhabungssystem 30 gemäß der ersten Ausführungsform vorgesehen sein. Entsprechend des zur Verfügung stehenden Bauraumes kann man entsprechende Positionen vorsehen.

Fig. 11 zeigt das erfindungsgemäße Handhabungssystem 300 in einer Seitenansicht sowie Fig. 12 zeigt das erfindungsgemäße Handhabungssystem 300 in einer perspektivischen Darstellung. Das Wirkprinzip des Handhabungssystems 300 ist mit einem Spindelantrieb 400 sowie einer Linearführung 320 im Wesentlichen identisch mit dem zuvor beschriebenen System gemäß der ersten Ausführungsform gezeigt in Figuren 1 bis 10. Aufgrund der baulichen Verlagerung des Systems 300 in den Seitenwandbereich des Aufnahmeraumes 10 ist eine schmalere Ausführung vorteilhaft, die mit einer Veränderung des Spindelantriebs 40 einhergeht. Dies ist jedoch anhand der zu berücksichtigenden Lasten, auftretenden Kräfte und Drehmomenten sowie einzusetzenden Handhabungskräften zu dimensionieren. Der Spindelantrieb 400 gemäß der zweiten Ausführungsform ist mit zwei Gewindespindeln 430, 431 ausgestattet, die über ein Zahnradgetriebe 440 in Wirkverbindung stehen. Damit ist möglicherweise eine leichtere Bauart erreicht. Über eine Kurbelstange 510 und einer Handkurbel 500 wird eine Mitnehmeranordnung 350 entlang der Führungsschiene 320 bewegt. Dafür sind die Spindelmuttern 420 und 421 mit dem hinteren Mitnehmer 360 in einer festen Verbindung vorgesehen.

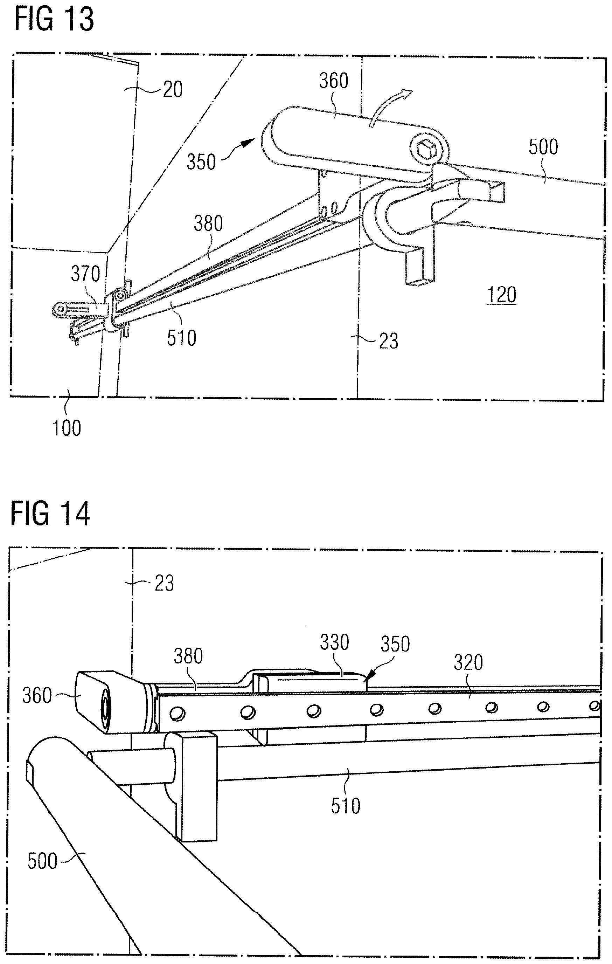

Weitere Einzelheiten sind in den Detaildarstellungen gemäß der Figuren 13 bis 17 gezeigt und werden nachfolgend beschrieben.

In Figuren 13 und 14 wird die Mitnehmeranordnung 350 als Bestandteil des Handhabungssystems 300 in Detaildarstellungen gezeigt. Das Handhabungssystem 300 ist an der Seitenwand 120 des Aufnahmeraumes 100 befestigt. Die Mitnehmeranordnung 350 wird mit Bewegungsschlitten 330 auf der Linearführung 320 bewegt. Dafür ist eine Trägerplatte 380 vorgesehen, die den vorderen Mitnehmer 360 mit dem hinteren Mitnehmer 370 verbindet sowie den vorderen Mitnehmer 360 auch drehbar lagert. Die Trägerplatte 380 ist vorzugsweise leistenförmig ausgebildet, um die entsprechenden Mitnehmer 360 und 370 entlang der Längsausdehnung des Versorgungsbehälters 20 zu halten. Der vordere Mitnehmer 360 kann in eine Anschlagposition an die vordere Wand 23 des Behälters 20 gedreht werden, nachdem der Versorgungsbehälter 20 in den Aufnahmeraum 100 eingefahren ist. Dann wird der Versorgungsbehälter 20 über die Mitnehmeranordnung 350 in seine Lagerposition bewegt bzw. von der Lagerposition in die Entnahmeposition. Wenn die Entnahmeposition des Versorgungsbehälters 20 erreicht ist, wird der Mitnehmer 360 so gedreht, dass er aus dem Verfahrweg des Versorgungsbehälters 20 gelangt und der Versorgungsbehälter 20 entnommen werden kann.

In den Figuren 15 bis 17 ist das Detail des Spindelantriebs 400 in verschiedenen Ansichten näher dargestellt. Der Spindelantrieb 400 gemäß dieser zweiten Ausführungsform ist mit zwei Gewindespindeln 430, 431 ausgestattet, die über ein Zahnradgetriebe 440 in Wirkverbindung stehen. Die zwei längsverlaufenden Gewindespindeln 430 und 431 mit dazwischenliegender, im Wesentlichen parallel zu den Gewindespindeln verlaufender Linearführung 320, können zur Bewegung des Versorgungsbehälters 20 kleiner dimensioniert werden als die Gewindespindel 43 gemäß der ersten Ausführungsform. Teile der Mitnehmeranordnung 350, insbesondere ein hinterer Mitnehmer 370 ist zwischen den Spindelmuttern 420, 421 positioniert. Aufgrund dieser Anordnung des festen Mitnehmers 370 zwischen den Spindelmuttern 420, 421 können hohe Momente vermieden werden, die auf den Mitnehmer 370 bei einer Verschiebung des Versorgungsbehälters 20 wirken könnten.

Fig. 15 zeigt weiterhin den hinteren Mitnehmer 370 in einer einstellbaren Ausführungsform. Über ein Langloch kann eine Feinpositionierung zwischen den Spindelmuttern 420 und 421 erfolgen. Ebenfalls ist ein Bumper 371 vorgesehen, der einen Schutz beim Anschlag an die Rückwand realisiert.

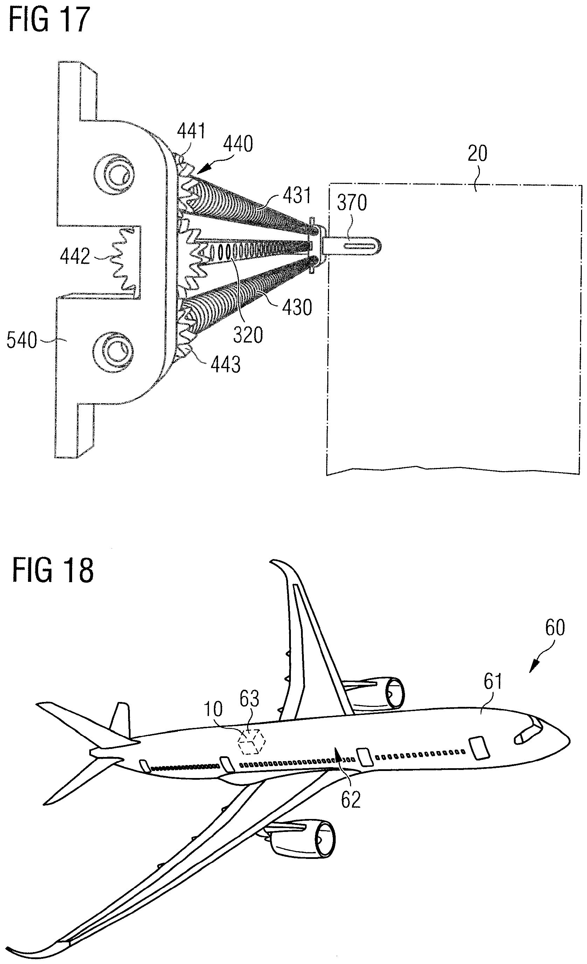

In Figuren 16 und 17 sind weiterhin die Befestigungsbeschläge 540 und 550 für die Lagerung der zwei Gewindespindeln 430 und 431 gezeigt. Diese Beschläge 540 und 550 werden in der gezeigten Ausführungsform an der Seitenwand des Aufnahmeraumes 100 befestigt. Möglich ist es jedoch auch, das Handhabungssystem 300 gemäß der zweiten Ausführungsform im Deckenbereich des Aufnahmeraumes 100 anzuordnen. Dies ist alternativ denkbar, abhängig vom zur Verfügung stehenden Bauraum.

Fig. 16 zeigt weiterhin die drehfeste Verbindung der Kurbelstange 510 mit einer der Gewindespindeln, gezeigt hier mit der Gewindespindel 430. Die Drehung der zweiten Gewindespindel 431 wird über die Zahnradanordnung 443, 442 und 441 sichergestellt, die in Fig. 17 ersichtlich ist..

Durch die gezeigten Komponenten kann folglich ein einfaches, dennoch sehr wirkungsvolles Handhabungssystem realisiert werden, das die Kompaktheit einer Bordküche oder anderen Einrichtungen deutlich vergrößern kann, denn ein Stellplatz mit ausreichender Tiefe kann mit mehreren Servierwagen hintereinander befüllt werden, ohne auf Beschränkungen, die sich durch die Handhabung eines Benutzers mit durchschnittlicher Körpergröße ergeben, Rücksicht nehmen zu müssen.

Schließlich zeigt Fig. 18 ein Flugzeug 60 mit einem Rumpf 61 und einer darin ausgebildeten Kabine 62, in der ein Kabinenmonument 63 angeordnet sein kann, das einen Aufnahmeraum 10 für Versorgungsbehälter aufweist und mit einem erfindungsgemäßen Handhabungssystem 30 ausgestattet ist. Vorzugsweise ist der Aufnahmeraum 10 ein Bestandteil einer Bordküche eines Verkehrsflugzeuges und die Deckplatte 19 ist gleichzeitig als Arbeitsplatte in der Bordküche nutzbar.

## Patentansprüche

1. Handhabungssystem (30) für Behälter (20) für einen Aufnahmeraum (10, 100), aufweisend:
eine Linearführung (32, 320), die an einer Seitenwand (110) oder einer Unterseite einer Deckplatte (19) des Aufnahmeraumes (10, 100) angeordnet werden kann,
wobei die Linearführung (32, 320) mindestens ein Mitnehmerelement (37, 370) entlang der Bewegungsrichtung des Behälters (20) führt,
wobei die Lagerposition des Behälters (20) mit seiner Rückwand (24) im Bereich der Rückwand (11, 110) des Aufnahmeraumes (10, 100) vorgesehen sein kann, sowie die Entnahmeposition im Bereich einer Einschuböffnung (13), angeordnet gegenüberliegend zur Rückwand (11, 110) des Aufnahmeraumes vorgesehen sein kann,
wobei das mindestens eine Mitnehmerelement (37, 370) in Wirkverbindung mit mindestens einer Spindelmutter (42, 420, 421) eines Spindelantriebs (40, 400) steht, welches den Behälter (20) von einer Verstau- und Lagerposition des Behälters (20) in eine Entnahmeposition des Behälter (20) und umgekehrt linear bewegt,
**dadurch gekennzeichnet, dass**
das mindestens eine Mitnehmerelement (37, 370) einen hinteren Mitnehmer bildet und über eine Tragplatte (38, 380) mit einem vorderen Mitnehmer (36, 360) verbunden ist, wobei diese Mitnehmeranordnung (35, 350) in der Linearführung (32, 320) bewegbar ist,
wobei der hintere Mitnehmer (37, 370) über ein Langloch einstellbar an der mindestens einer Spindelmutter (42, 420, 421) angeordnet ist, und
wobei der vordere Mitnehmer (36, 360) drehbar oder verschiebbar ausgebildet ist, um beim Einfahren des Behälters (20) in den Aufnahmeraum (10, 100) aus einem Bewegungsraum entfernt werden zu können.

2. System (30) nach Anspruch 1,
wobei der Aufnahmeraum (10, 110) zum Aufnehmen mindestens zwei hintereinander angeordneter Behälter (20) mit einem vorderen Stellplatz (14) und einem hinteren Stellplatz (15) ausgebildet ist, wobei sich die Linearführung (32) im Wesentlichen von der Einschuböffnung (13) im Bereich des vorderen Stellplatzes (14) bis im Wesentlichen zur Rückwand (11, 110) des Aufnahmeraumes (10, 100) erstreckt.

3. System (30) nach einem der Ansprüche 1 oder 2,
wobei der Spindelantrieb (40, 400) mindestens eine Gewindespindel (43, 430, 431) aufweist.

4. System (30) nach einem der Ansprüche 1 bis 3,
aufweisend zwei parallel verlaufende Gewindespindeln (430, 431), zwischen denen das mindestens eine Mitnehmerelement (37, 370) gelagert ist.

5. System (30) nach einem der Ansprüche 1 bis 4,
der Spindelantrieb (40, 400, 43, 430, 431) über einen Kurbelantrieb (50, 51, 500, 510) angetrieben wird.

6. System (30) nach Anspruch 5,
wobei der Kurbelantrieb eine Kurbelstange (51, 510) sowie eine Handkurbel (50,500) aufweist und die Kurbelstange (51, 510) drehfest mit mindestens einer Gewindespindel (43, 430) verbunden ist.

7. System (30) nach einem der Ansprüche 1 bis 5,
wobei der Spindelantrieb (40, 400) einen Elektromotor aufweist.

8. Fahrzeug (60), vorzugsweise ein Verkehrsflugzeug, mit einer Kabine (62) und einem darin befindlichen Kabinenmonument (64) mit einem Aufnahmeraum (10, 100), das ein Handhabungssystem (30) nach einem der Ansprüche 1 bis 7 aufweist.

## Claims

1. Handling system (30) for containers (20) for a receiving space (10, 100), having:
a linear guide (32, 320), which can be arranged on a side wall (110) or on an underside of a cover panel (19) of the receiving space (10, 100),
wherein the linear guide (32, 320) guides at least one driver element (37, 370) along the direction of movement of the container (20),
wherein the storage position of the container (20) can be provided with its rear wall (24) in the region of the rear wall (11, 110) of the receiving space (10, 100), and the removal position can be provided in the region of an insertion opening (13), arranged lying opposite the rear wall (11, 110) of the receiving space,
wherein the at least one driver element (37, 370) is operatively connected to at least one spindle nut (42, 420, 421) of a spindle drive (40, 400), which moves the container (20) linearly from a stowage and storage position of the container (20) into a removal position of the container (20), and vice versa,
**characterized in that** the at least one driver element (37, 370) forms a rear driver and is connected to a front driver (36, 360) via a supporting plate (38, 380), wherein said driver arrangement (35, 350) is movable in the linear guide (32, 320),
wherein the rear driver (37, 370) is arranged via a slot on the at least one spindle nut (42, 420, 421) so as to be adjustable, and
wherein the front driver (36, 360) is designed to be rotatable or displaceable in order to be able to be removed from a movement space when the container (20) is moved into the receiving space (10, 100).

2. System (30) according to Claim 1,
wherein the receiving space (10, 110) is designed with a front parking space (14) and a rear parking space (15) in order to receive at least two containers (20) arranged one behind the other, wherein the linear guide (32) extends substantially from the insertion opening (13) in the region of the front parking space (14) to substantially as far as the rear wall (11, 110) of the receiving space (10, 100).

3. System (30) according to either one of Claims 1 and 2,
wherein the spindle drive (40, 400) has at least one threaded spindle (43, 430, 431).

4. System (30) according to any of Claims 1 to 3,
having two threaded spindles (430, 431) which run parallel and between which the at least one driver element (37, 370) is mounted.

5. System (30) according to any of Claims 1 to 4,
the spindle drive (40, 400, 43, 430, 431) is driven via a crank drive (50, 51, 500, 510).

6. System (30) according to Claim 5,
wherein the crank drive has a crank rod (51, 510) and a hand crank (50, 500) and the crank rod (51, 510) is connected to at least one threaded spindle (43, 430) for rotation therewith.

7. System (30) according to any of Claims 1 to 5,
wherein the spindle drive (40, 400) has an electric motor.

8. Vehicle (60), preferably a passenger aircraft, having a cabin (62) and having a cabin monument (64) which is situated therein and which has a receiving space (10, 100) which has a handling system (30) according to any of Claims 1 to 7.

## Revendications

1. Système (30) de manutention de conteneurs (20) pour un espace de réception (10, 100), comprenant :
un guide linéaire (32, 320) qui est apte à être agencé sur une paroi latérale (110) ou une face inférieure d'un panneau supérieur (19) de l'espace de réception (10, 100),
le guide linéaire (32, 320) guidant au moins un organe d'entraînement (37, 370) le long de la direction de déplacement du conteneur (20),
la position de stockage du conteneur (20) avec sa paroi arrière (24) pouvant être prévue dans la zone de la paroi arrière (11, 110) de l'espace de réception (10, 100), et la position de prélèvement pouvant être prévue dans la zone d'une ouverture d'insertion (13), agencée à l'opposé de la paroi arrière (11, 110) de l'espace de réception,
ledit au moins un organe d'entraînement (37, 370) étant en liaison fonctionnelle avec au moins un écrou de broche (42, 420, 421) d'un système d'entraînement à broche (40, 400), qui déplace linéairement le conteneur (20) depuis une position de rangement et de stockage du conteneur (20) dans une position de prélèvement du conteneur (20) et inversement,
**caractérisé en ce que** ledit au moins un organe d'entraînement (37, 370) forme un organe d'entraînement arrière et est relié à un organe d'entraînement avant (36, 360) par l'intermédiaire d'une plaque de support (38, 380), cet ensemble d'organes d'entraînement (35, 350) étant mobile dans le guide linéaire (32, 320),
l'organe d'entraînement arrière (37, 370) étant agencé de manière réglable sur ledit au moins un écrou de broche (42, 420, 421) via un trou oblong, et
l'organe d'entraînement avant (36, 360) étant conçu de manière à pouvoir être tourné ou déplacé, afin d'être apte à être retiré d'un espace de déplacement lorsque le conteneur (20) est déplacé dans l'espace de réception (10, 100).

2. Système (30) selon la revendication 1,
dans lequel l'espace de réception (10, 110) est conçu de façon à recevoir au moins deux conteneurs (20) agencés l'un derrière l'autre avec un emplacement avant (14) et un emplacement arrière (15), le guidage linéaire (32) s'étendant essentiellement de l'ouverture d'insertion (13) dans la zone de l'emplacement avant (14) jusqu'à essentiellement la paroi arrière (11, 110) de l'espace de réception (10, 100).

3. Système (30) selon l'une des revendications 1 ou 2, dans lequel le système d'entraînement à broche (40, 400) comprend au moins une broche filetée (43, 430, 431).

4. Système (30) selon l'une des revendications 1 à 3,
présentant deux broches filetées (430, 431) parallèles, entre lesquelles est monté ledit au moins un organe d'entraînement (37, 370).

5. Système (30) selon l'une des revendications 1 à 4,
le système d'entraînement à broche (40, 400, 43, 430, 431) étant entraîné par un système d'entraînement à manivelle (50, 51, 500, 510).

6. Système (30) selon la revendication 5,
dans lequel l'système d'entraînement à manivelle présente une tige de manivelle (51, 510) ainsi qu'une manivelle (50, 500) et la tige de manivelle (51, 510) est reliée de manière solidaire en rotation à au moins une broche filetée (43, 430).

7. Système (30) selon l'une des revendications 1 à 5,
dans lequel le système d'entraînement à broche (40, 400) comprend un moteur électrique.

8. Véhicule (60), de préférence un avion de ligne, comprenant une cabine (62) et un monument de cabine (63) situé à l'intérieur de celle-ci et comprenant un espace de réception (10, 100), qui comprend un système (30) de manutention selon l'une des revendications 1 à 7.
